# EUROPÄISCHE PATENTSCHRIFT

(11) **EP 3 404 170 B1**
(45) Veröffentlichungstag und Bekanntmachung des Hinweises auf die Patenterteilung: **05.05.2021**
(21) Anmeldenummer: 17020216.2
(22) Anmeldetag: 18.05.2017
(51) Int. Cl.: E04G 15/06, F16L 5/02, H02G 3/22, F16L 55/11, E03F 5/04, F16L 5/10

(54) **VERWENDUNG EINER DURCHFÜHRUNG ZUM EINBAU IN EIN WAND- ODER BODENELEMENT**
USE OF A FEED-THROUGH FOR A FLOOR OR CEILING ELEMENT
UTILISATION D'UN PASSAGE ENCASTRABLE DANS UN ÉLÉMENT DE MUR OU DE SOL

(43) Veröffentlichungstag der Anmeldung: 21.11.2018
(73) Patentinhaber: Hauff-Technik GmbH & Co. KG, 89568 Hermaringen (DE)
(72) Erfinder: Schmid, Jörg, 89129 Langenau (DE)
(74) Vertreter: König Szynka Tilmann von Renesse Patentanwälte Partnerschaft mbB

(56) Entgegenhaltungen:
- EP-A1- 2 511 580
- EP-A1- 3 012 501
- US-A- 5 711 536
- US-A- 6 029 981

## Beschreibung

Die vorliegende Erfindung betrifft eine Verwendung einer Durchführung zum Einbau in ein Wand- oder Bodenelement und Hindurchführen einer Leitung.

Der Einbau kann bspw. durch Vergießen mit Beton erfolgen. Etwa beim Gießen einer Betonwand kann die Durchführung dazu an einer Schalung montiert werden, wobei dann ein Rohrelement der Durchführung von dem Beton umschlossen wird. Das Rohrelement hält eine Durchgangsöffnung zwischen den entgegengesetzten Seiten des Wandelements frei. Durch diese kann dann nach dem Aushärten des Betons und dem Entfernen der Schalungselemente bspw. ein Kabel oder eine anderweitige Leitung von einer Seite des Wandelements durch das Rohrelement hindurch auf die entgegengesetzte Seite verlegt werden. Dies ist aber nur ein Beispiel, das den Gegenstand zunächst nicht in seiner Allgemeinheit beschränken soll.

Die US 5,711,536 A betrifft eine Durchführung für Rohre, die in Tank- bzw. Schachtwände eingebaut wird. Nach dem Eingießen der Durchführung können zur Anpassung an unterschiedliche Rohrdurchmesser unterschiedlich große Verschlussscheiben durch Auftrennen einer Sollbruchstelle herausgetrennt werden.

EP 3 012 501 A1 offenbart die Verwendung einer Durchführung.

Der vorliegenden Erfindung liegt das technische Problem zugrunde, eine vorteilhafte Durchführung als Gegenstand einer Verwendung anzugeben.

Erfindungsgemäß wird dies mit der Verwendung gemäß Anspruch 1 gelöst. Die Durchführung weist einen Verschluss auf, der das Rohrelement in Bezug auf dessen Längsrichtung verschließt, also abdichtet (im Rahmen des technisch Üblichen einen Wasserdurchtritt verhindert). Ferner weist die erfindungsgemäße Durchführung einen Ablasskanal auf, der einen im Vergleich zu dem Rohrelement kleineren Querschnitt hat. Durch diesen Ablasskanal kann vorteilhafterweise etwaiges Wasser, das sich auf einer Seite des Verschlusses in dem Rohrelement gesammelt hat, von der anderen Seite her, typischerweise der Gebäudeinnenseite, abgelassen werden. Der Ablasskanal kann ein kontrolliertes Ablassen von Wasser ermöglichen, was im Zuge der erfindungsgemäßen Verwendung von Vorteil ist.

Die Durchführung kann bspw. in die Wand eines Wohn- oder vorzugsweise Technikgebäudes, insbesondere einer Transformatorenstation (Umspannwerk), eingebaut sein. Gebäudeaußenseitig wird erfindungsgemäß ein sog. Schutzrohr an die Durchgangsöffnung und damit zumindest mittelbar an das Rohrelement der Durchführung angeschlossen. In diesem wird dann die eigentliche Leitung, bspw. eine Gas-, Wasser- oder auch Fernwärmeleitung, bevorzugt ein Kabel (Elektro- und/oder Daten etc.), außenseitig des Gebäudes verlegt werden. Die eigentliche Leitung wird mitunter aber auch erst Wochen oder Monate nach dem Schutzrohr verlegt, das insoweit blindvorverlegt sein kann. Der Verschluss ist hier bspw. ein Blinddeckel, der für sich das Rohrelement und damit das daran angeschlossene Schutzrohr zum Gebäudeinneren hin verschließt.

Die Erfinder haben festgestellt, dass sich gebäudeaußenseitig Wasser in dem Schutzrohr sammeln kann, bspw. Grund- oder Regenwasser, das dann in hügeligem Gelände auch mit einigem Druck an dem Verschluss ansteht. Entfernt ein Monteur diesen, wenn bspw. das Schutzrohr mit einer Leitung belegt werden soll, würde das gesamte Wasser unkontrolliert in das Gebäudeinnere gelangen bzw. wäre auch bereits das Entfernen an sich unter hohem Druck gefährlich. Durch den erfindungsgemäß vorgesehenen Ablasskanal wird hingegen zuvor das Wasser kontrolliert zum Gebäudeinneren hin abgelassen, bspw. indem an den Ablasskanal ein Ablassschlauch angeschlossen und nach außerhalb des Gebäudes bzw. zu einem Abfluss verlegt wird. Dies soll die Vorteile in einem bevorzugten Anwendungsfall illustrieren.

Der Ablasskanal hat zum Zwecke des kontrollierten Ablassens und bspw. auch für ein komfortables Anschließen eines Ablassschlauchs einen kleineren Querschnitt (eine kleinere Querschnittsfläche), etwa im Vergleich zu dem Rohrelement. Das Querschnittsverhältnis (Ablasskanal zu Rohrelement) kann bspw. bei höchstens 1/3, 1/4, 1/5, 1/6, 1/7 bzw. 1/8 liegen, mit möglichen Untergrenzen (davon unabhängig) bei bspw. mindestens 1/100, 1/80 bzw. 1/60 (jeweils in der Reihenfolge der Nennung zunehmend bevorzugt). Die Querschnittsfläche des Rohrelements wird in einer senkrecht zu dessen Längsrichtung liegenden Schnittebene als Innenquerschnitt genommen, also bis zu einer das Rohrelementinnenvolumen radial begrenzenden Rohrelementinnenwand (wobei im Falle einer über die Längsrichtung variierenden Querschnittsfläche ein darüber gebildeter Mittelwert betrachtet wird, bevorzugt ist sie aber konstant). Die Querschnittsfläche des Ablasskanals wird in einer senkrecht zu dessen Durchströmungsrichtung liegenden Schnittebene genommen, die bevorzugt einer Einschieberichtung (siehe unten) entgegengesetzt und/oder parallel zur Längsrichtung liegt. Sie wird dort genommen, wo der geöffnete Ablasskanal (also unter Vernachlässigung eines bevorzugt vorgesehenen Blindverschlusses) den kleinsten Querschnitt hat.

Der reduzierte Querschnitt des Ablasskanals kann bspw. hinsichtlich des Einsetzens einer Ablasseinheit (siehe unten) vorteilhaft sein. Es skaliert nämlich die für das Einsetzen bzw. -schieben notwendige Kraft, soweit der Druck einer auf der anderen Seite anstehenden Wassersäule betrachtet wird, mit dem Querschnitt des Ablasskanals. Dementsprechend ist eine Begrenzung der Querschnittsfläche des (geöffneten) Ablasskanals vorteilhaft, bspw. auf höchstens 25 cm², 20 cm², 15 cm², 10 cm², 8 cm², 6 cm², 5 cm², 4 cm², 3 cm² bzw. 2,5 cm², wobei mögliche Untergrenzen (davon unabhängig) bspw. bei mindestens 0,2 cm², 0,5 cm² bzw. 0,8 cm² liegen können. Auch dies ist als mögliche Konkretisierung des hauptanspruchsgemäß "kleineren Querschnitt" zu lesen.

Weitere bevorzugte Ausführungsformen finden sich in den abhängigen Ansprüchen und der gesamten Offenbarung.

Bei einer bevorzugten Ausführungsform ist der Ablasskanal in dem Verschluss vorgesehen, verbindet also der geöffnete Ablasskanal dann die eine Seite des Verschlusses druckfluidisch mit der anderen. In Längsrichtung gesehen verdeckt der Verschluss das Rohrelementinnenvolumen bevorzugt vollständig. Bevorzugt ist ein sich radial bis zur Rohrelementinnenwand erstreckender Verschluss, der im Allgemeinen auch einstückig/monolithisch in das Rohrelement übergehen kann, bevorzugt jedoch an der Rohrelementinnenwand anliegt, insbesondere reversibel herausnehm- und wieder einsetzbar ist, siehe unten im Detail.

Der Verschluss kann bspw. auch ein sog. Systemdeckel sein und eine Durchlassöffnung für die Leitung aufweisen, letztere kann bspw. mit einem Schrumpfschlauch oder einem anderen Dichtelement gegen den Systemdeckel gedichtet sein. Bevorzugt ist der Verschluss jedoch ein Blinddeckel, der das Rohrelement bspw. bereits während des Einbaus in das Wand- oder Bodenelement und dann im Falle einer Blindvorverlegung auch noch darüber hinaus verschließen kann. Er wird dann zum Hindurchführen der Leitung herausgenommen und durch einen gegen die Leitung dichtenden Verschluss, bspw. einen Systemdeckel oder auch eine Pressdichtung, ausgetauscht.

In Längsrichtung gesehen fluchtet der Ablasskanal bevorzugt mit dem Rohrelement, vorzugsweise ist er in den Verschluss integriert. Im Allgemeinen wäre hingegen bspw. auch ein in einer Flanschplatte (siehe unten) der Durchführung mündender Ablasskanal denkbar, der bspw. in einem kleinen Abzweig von dem Rohrelement abgeht und somit gegenüber dem Rohrelement nach radial außen versetzt wäre. Im Vergleich dazu kann der in den Verschluss integrierte Ablasskanal bspw. insoweit vorteilhaft sein, als er dann beim Entfernen des Verschlusses mit entfernt wird, also einer Schwachstelle und damit späteren Undichtigkeiten vorgebeugt werden kann.

In bevorzugter Ausgestaltung weist die Durchführung eine Ablasseinheit zum Einsetzen in den Ablasskanal auf. Diese Ablasseinheit ist zumindest abschnittsweise als Hohlkörper ausgebildet, den das Wasser beim Ablassen durchströmt. Eine Funktion der Ablasseinheit kann bspw. darin bestehen, das Wasser dann auch über den Ablasskanal hinaus ein Stück weit zu führen. Bevorzugt findet die Ablasseinheit in Verbindung mit einem durch einen Blindverschluss verschlossenen Ablasskanal Anwendung, wird dieser nämlich mit dem Einsetzen der Ablasseinheit geöffnet. Wenngleich im Allgemeinen auch eine mit der übrigen Durchführung bzw. Teilen davon einstückige bzw. monolithische (siehe unten) Ablasseinheit denkbar ist, bspw. durch Spritzguss mit angeformt, ist eine zur übrigen Durchführung mehrteilige Ablasseinheit bevorzugt. Bildlich gesprochen kann der Blindverschluss mit der Ablasseinheit wie bei einem Fassanstich aufgestochen und der Ablasskanal damit geöffnet werden.

In bevorzugter Ausgestaltung ist der Blindverschluss einstückig, bevorzugt monolithisch mit einem den Ablasskanal bildenden Teil der Durchführung ausgebildet, vorzugsweise mit dem Verschluss. "Einstückig" meint nicht zerstörungsfrei voneinander trennbar, wobei die miteinander einstückigen Teile im Allgemeinen noch aus unterschiedlichen Materialien vorgesehen sein können, etwa im Falle eines Mehr-Komponenten-Spritzgussteils. Es könnte also bspw. der den Ablasskanal bildende Teil der Durchführung, insbesondere der Verschluss, aus einem Hartkunststoff vorgesehen sein und den Ablasskanal eine als Blindverschluss angespritzte Membran aus einem Weichkunststoff verschließen, die mit dem Einschieben der Ablasseinheit aufgerissen wird. Bevorzugt ist eine "monolithische" Ausgestaltung aus demselben, durchgehenden Material ohne Materialgrenze dazwischen (von statistisch verteilten Einschlüssen etc. abgesehen), sind der Verschluss und der den Ablasskanal bildende Teil der Durchführung also bspw. als Spritzgussteil aus derselben Komponente gespritzt.

Unabhängig davon im Einzelnen wird der einstückig/monolithisch vorgesehene Blindverschluss mit dem Einschieben der Ablasseinheit geöffnet, wird also der Materialverbund lokal irreversibel aufgetrennt und damit der Ablasskanal geöffnet. Der Blindverschluss kann bspw. über eine Sollbruchstelle, die unter der mit der Ablasseinheit beim Einsetzen übertragenen Kraft aufgetrennt wird, in den Teil der Durchführung übergehen, der den Ablasskanal bildet. Dies kann insbesondere im Falle der monolithischen Ausgestaltung von Interesse sein kann. Generell kann der Blindverschluss mit dem Ausstoßen auch noch einstückig/monolithisch mit dem anderen Teil verbunden bleiben, bspw. scharnierartig, also seitlich wegklappen. Bevorzugt wird er vollständig abgetrennt. Wenngleich auch ein endseitig an den Ablasskanal angesetzter Blindverschluss denkbar ist, sitzt er bevorzugt darin und wird er beim Einsetzen der Ablasseinheit abgetrennt und herausgeschoben. Generell erfolgt das Einsetzen der Ablasseinheit bevorzugt ruckartig, wird die Ablasseinheit also eingeschlagen, insb. mit einem Schlagwerkzeug, bspw. einem Hammer.

Bei einer bevorzugten Ausführungsform weist die Ablasseinheit einen Zapfen auf, der in den Ablasskanal mit einer geradlinigen Bewegung bis in eine Einschiebeposition eingeschoben werden kann, also bspw. nicht wie im Falle einer Gewindeführung durch Drehen bis in die Einschiebeposition gebracht werden muss, sondern bspw. eingeschlagen werden kann (dabei ist im Allgemeinen während des Einschiebens zwar auch eine Drehbewegung möglich, sie ist aber nicht erforderlich). Auf seinem Weg in die Einschiebeposition öffnet der Zapfen den Blindverschluss, was entsprechend beschleunigt und damit kraftvoll erfolgen kann. Im Allgemeinen könnte der Zapfen auch lediglich als Vollkörper einen Öffnungsdorn darstellen und axial an ein Rohrstück der Ablasseinheit anschließen. Bevorzugt ist der Zapfen selbst ein Hohlkörper, durch welchen dann das abgelassene Wasser geführt wird.

In bevorzugter Ausgestaltung ist der Zapfen in der Einschiebeposition, in die er bevorzugt mit einem Schlag gebracht wird und dabei den Blindverschluss öffnet, durch Drehen in einer Drehrichtung arretierbar, bevorzugt mit einer Rechtsdrehung (in Einschieberichtung gesehen). Der Zapfen ist bevorzugt nicht über einen gesamten Umlauf (360°) drehbar, eine Drehbewegung ist bevorzugt auf höchstens 180°, 170° bzw. 160° begrenzt, wobei mögliche Untergrenzen (davon unabhängig) bspw. bei mindestens 40°, 60°, 80°, 100° bzw. 120° liegen können (jeweils in der Reihenfolge der Nennung zunehmend bevorzugt).

Bei einer bevorzugten Ausführungsform weist der Zapfen einen Vorsprung auf, der sich außenseitig daran senkrecht zu der Drehachse nach außen weg erhebt. Der Vorsprung kann sich bspw. um mindestens 5 %, 10 %, 15 % bzw. 20 % eines Durchmessers des übrigen Zapfens und (davon unabhängig) bspw. nicht mehr als 80 %, 60 % bzw. 40 % davon von dem übrigen Zapfen weg erheben (jeweils in der Reihenfolge der Nennung zunehmend bevorzugt). Bezogen auf den Umlauf um die Drehachse kann sich der Vorsprung z. B. über einen Winkelbereich von mindestens 5° bzw. 10° und (davon unabhängig) bspw. nicht mehr als 30°, 20° bzw. 15° erstrecken (jeweils in der Reihenfolge der Nennung zunehmend bevorzugt). Bevorzugt ist an dem Zapfen ein weiterer Vorsprung vorgesehen, der vorzugsweise drehsymmetrisch zu dem ersten Vorsprung ausgebildet und/oder angeordnet ist; sämtliche zu "einem" Vorsprung getroffenen Angaben sind also immer auch auf eine Mehrzahl zu lesen, besonders bevorzugt sind genau zwei um 180° zueinander drehsymmetrische Vorsprünge.

Unabhängig davon im Einzelnen dient der Vorsprung der Arretierung des Zapfens, wozu er bevorzugt über zumindest einen Abschnitt einer entsprechenden Drehbewegung an einer ansteigenden Führungsfläche geführt ist. Infolge des Anstiegs zieht der geführte Vorsprung den Zapfen zunehmend in einen Sitz in dem Ablasskanal. Im Allgemeinen ist auch eine gestuft ansteigende Führungsfläche denkbar, bevorzugt ist ein glatter Verlauf, ggf. von einem Übergang in einen Endabschnitt abgesehen (siehe unten). Die "ansteigende" Führungsfläche hat eine Erstreckung in der Drehrichtung und zugleich auch eine Erstreckung in der Einschieberichtung; in dem Abschnitt kann der Vorsprung also wie in einem Gewinde geführt sein. Die Führungsfläche ist dem Ablasskanal zugeordnet, relativ dazu also lagefixiert.

Wenngleich die Führungsfläche im Allgemeinen auch in einer den Ablasskanal begrenzenden Wandfläche angeordnet sein kann, liegt sie bevorzugt in einem Außenflächenbereich, der in der Einschieberichtung an den Ablasskanal anschließt. Ist der Ablasskanal in dem Verschluss vorgesehen, liegt die Führungsfläche bevorzugt an einer Stirnseite davon (bzw. liegt allgemein der Außenflächenbereich zur Führung des Vorsprungs stirnseitig). Unabhängig davon im Einzelnen kann sich die Führungsfläche um die Drehachse bspw. über einen Winkelbereich von mindestens 10°, 20°, 30° bzw. 40° erstrecken, wobei mögliche Obergrenzen (davon unabhängig) bspw. bei höchstens 160°, 150°, 140°, 130°, 120°, 110° bzw. 100° liegen können (jeweils in der Reihenfolge der Nennung zunehmend bevorzugt).

Bei einer bevorzugten Ausführungsform ist in der Drehrichtung auf einen Endabschnitt der Führungsfläche folgend eine Vertiefungsfläche vorgesehen, auf welche der Vorsprung hinabrutscht und damit ein Stück weit gegen ein Herausdrehen in entgegengesetzter Drehrichtung gesichert ist. Bevorzugt ist an dem Zapfen ein Dichtring vorgesehen (siehe unten im Einzelnen), der mit der Drehbewegung zunehmend komprimiert wird. Der in der Vertiefungsfläche angeordnete Vorsprung muss dann, damit ein Herausdrehen in entgegengesetzter Drehrichtung möglich wird, ein wenig versetzt werden, es muss also der Zapfen gegen die Federkraft des Dichtelements in Einschieberichtung gedrückt werden. Der Vorsprung sitzt in der Vertiefungsfläche gegen ein unerwünschtes Herausdrehen gesichert, insbesondere im Falle einer zusätzlichen Federbeaufschlagung, bevorzugt durch einen Dichtring.

Die Vertiefungsfläche ist gegenüber dem Endabschnitt der Führungsfläche entgegen der Einschieberichtung zurückversetzt. Bevorzugt kann eine Führungsfläche sein, bei welcher der Übergang in den Endabschnitt stufenförmig erfolgt. Der Vorsprung wird dann entlang der ansteigenden Führungsfläche über die Stufe in den Endabschnitt bewegt und rutscht anschließend auf die Vertiefungsfläche. Mit der Bewegung über die Stufe hinweg kann für einen Monteur das (baldige) Erreichen der arretierten Endposition "angezeigt", bei der Drehbewegung spürbar gemacht werden. Je nach Montagesituation muss die Ablasseinheit nach dem Einschieben und damit Öffnen des Blindverschlusses mitunter gegen mehrere Meter Wassersäule gehalten werden, weswegen diese Montagehilfe vorteilhaft sein kann.

Unabhängig davon im Einzelnen kann eine Gleitfläche des Vorsprungs, mit welcher dieser entlang der Führungsfläche etc. rutscht, in einer Blickrichtung senkrecht zur Drehachse gesehen bevorzugt rund, insbesondere kreisrund sein. In besagter Blickrichtung betrachtet kann der Vorsprung insgesamt eine in der Einschieberichtung zulaufende Form haben, also an dem Ende mit der Gleitfläche breiter als am in Einschieberichtung entgegengesetzten Ende sein, bspw. eine Tropfenform haben. Das schmale, beim Einschieben vordere Ende kann ein zügiges und ungehindertes Einschieben begünstigen, das breitere Ende ist dann gut drehbar geführt.

Bei einer bevorzugten Ausführungsform weist der Zapfen einen Rastmechanismus auf, der ihn nach dem Öffnen bzw. Ausstoßen des Blindverschlusses gegen ein Herausrutschen sichert (entgegen der Einschieberichtung). Der Zapfen kann also geradlinig mit einem Ruck eingebracht werden, bspw. durch einen Schlag, und ist dann noch vor der Dreharretierung gesichert. Es kann dann ein Monteur auch in Alleinarbeit die Ablasseinheit montieren, nämlich in einem ersten Schritt mit der einen Hand die Ablasseinheit ansetzen und mit der anderen Hand das Schlagwerkzeug führen, das er in einem zweiten Schritt weglegt und für das Drehen an der Ablasseinheit umgreift. Bei diesem kritischen Schritt könnte der Zapfen ohne die Sicherung herausrutschen und ließe sich dann kaum noch gegen das herausschießende Wasser einsetzen.

Im Allgemeinen könnte der Rastmechanismus auch mit einer in dem Zapfen vorgesehenen Vertiefung realisiert sein, in die eine dem Ablasskanal zugeordnete Rastnase einschnappt. Bevorzugt ist der Zapfen mit einer Rastnase versehen. Diese kann eine Vorderfläche aufweisen, entlang der sie beim Einschieben in den Ablasskanal rutscht, und eine Hinterfläche, mit der sie den Rastsitz findet, bspw. auf der Führungsfläche für den Vorsprung. Die Vorderfläche ist flacher angestellt als die Hinterfläche.

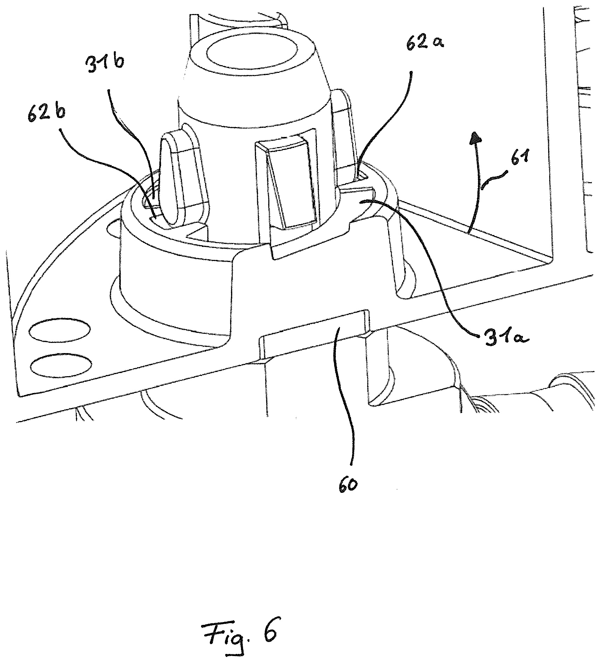

Bevorzugt ist die Rastnase gegen eine Federkraft nach radial innen (in Bezug auf die Drehachse) auslenkbar und nimmt sie bei Wegnahme einer entsprechenden Auslenkkraft wieder ihre Ausgangsposition ein, und zwar federkraftgetrieben. Bevorzugt ist die Rastnase dazu auf einer in der Zapfenwand gebildeten Zunge angeordnet; es durchsetzt also eine Trennfuge die Zapfenwand (verbindet das Innere des Hohlkörpers mit dem Äußeren), wobei diese Trennfuge nicht in sich geschlossen ist und somit die Zunge als freitragende Struktur bildet. Hinsichtlich der späteren Wasserführungsfunktion ist diese Trennfuge insoweit unproblematisch, als sie dann ohnehin in einem insgesamt mit Wasser gefüllten Bereich liegt, vgl. Figur 6 zur Illustration. Bevorzugt ist an dem Zapfen zusätzlich eine weitere Rastnase vorgesehen, bevorzugt um die Drehachse drehsymmetrisch zu der ersten. Besonders bevorzugt sind genau zwei um 180° zueinander drehsymmetrische Rastnasen.

Bei einer bevorzugten Ausführungsform ist in einer den Ablasskanal begrenzenden Innenwandfläche eine Rille gebildet, in welcher der Vorsprung beim Einschieben geführt ist. Ist er während des Einschiebens in der Rille angeordnet, ist eine Drehbewegung blockiert; sie ist dann freigegeben, wenn sich der Zapfen in der Einschiebeposition befindet, der Vorsprung liegt dann außerhalb der Rille.

In bevorzugter Ausgestaltung ist eine Dichtung vorgesehen, welche die eingesetzte Ablasseinheit gegen den den Ablasskanal bildenden Teil der Durchführung (bevorzugt den Verschluss) dichtet. Im Allgemeinen ist auch eine angeformte Dichtung möglich, bspw. eine durch Mehr-Komponenten-Spritzguss an den Verschluss oder die Ablasseinheit angeformte Dichtung. Bevorzugt ist eine zu der Ablasseinheit und dem den Ablasskanal bildenden Teil der Durchführung mehrteilige Dichtung, insb. ein Dichtring, der besonders bevorzugt auf den Zapfen der Ablasseinheit gesetzt ist und bspw. durch Vorsprung und/oder Rastnase gegen ein Herunterrutschen gesichert sein kann. Die Dichtung kann nicht nur aufgrund der Dichtfunktion, sondern auch hinsichtlich einer Federfunktion von Interesse sein, siehe vorne.

Bei einer bevorzugten Ausführungsform weist die Ablasseinheit einen Schlauchanschluss auf, bevorzugt einen Anschlussstutzen, der insb. außenseitig gerippt sein kann. Auf diesen kann ein Schlauch gesetzt und bspw. nach außerhalb des Technikgebäudes / der Trafostation verlegt werden. Der Schlauch kann bspw. mit einer Schelle auf dem Anschlussstutzen gesichert werden. Bevorzugt kann ein angeschlossener Schlauch seinerseits mit einer Armatur versehen sein, im einfachsten Fall mit einem Quetschhahn. Während der Montage der Ablasseinheit kann ein weitergehender Abfluss dann zunächst noch blockiert sein. Bevorzugt ist beim Einsetzen der Ablasseinheit bereits ein Schlauch angeschlossen, wobei die Ablasseinheit weiter bevorzugt intrinsisch druckfluidisch leitend ausgebildet ist, funktional also ein Rohrstück darstellt. Im Allgemeinen wäre indes auch eine Ablasseinheit mit einer betätigbaren Armatur möglich, bspw. einem Sperrhahn bzw. Sperrventil. In diesem Fall könnte auch zunächst die Ablasseinheit eingebracht und dann der Schlauch angeschlossen werden.

Unabhängig davon im Einzelnen erstreckt sich der Schlauchanschluss bevorzugt gewinkelt, insbesondere senkrecht, zur Drehachse von dem Zapfen weg. Im Vergleich zu einer mit betätigbarer Armatur vorgesehenen Ablasseinheit kann die Ausgestaltung als (insb. gewinkeltes) Rohrstück eine einfache und damit kostengünstige, zugleich aber robuste Lösung ergeben, was auch hinsichtlich des Einschlagens von Interesse sein kann. Diesbezüglich kann übrigens auch der gewinkelte Schlauchanschluss vorteilhaft sein, weil so ein in der Einschieberichtung mit dem Zapfen fluchtender Stirnseitenbereich als Schlagfläche genutzt werden kann, ohne dass der Schlauchanschluss beschädigungsgefährdet wäre.

Bei einer bevorzugten Ausführungsform ist der Verschluss reversibel aus dem Rohrelement entfernbar und wiedereinsetzbar, bspw. schraubbar. Bevorzugt ist ein kombinierter Einschiebe-/drehmechanismus, insbesondere mit Bajonett-Arretierung. Der Verschluss kann dann bspw. durch ein kombiniertes Andrücken und Drehen in entgegengesetzter Richtung wieder gelöst und aus dem Rohrelement genommen werden.

In dem reversibel entfernbaren Verschluss sind bevorzugt eine Mehrzahl Ablasskanäle angeordnet, also mindestens 2, weiter und besonders bevorzugt mindestens 3 bzw. 4 Ablasskanäle (mit möglichen Obergrenzen bei bspw. höchstens 12, 10 bzw. 8). Bevorzugt ist jeder der Ablasskanäle in einer vorliegend offenbarten Weise ausgebildet, insbesondere also jeweils mit einem Blindverschluss ausgestattet etc. Mehrere Ablasskanäle können zunächst Montagefehlern vorbeugen helfen, weil ein mit nur einem exzentrischen Ablasskanal versehener Verschluss bei falscher Montage (Ablasskanal "oben") nur ein teilweises Entleeren erlaubt. In der Bauphase, in welcher der Verschluss eingesetzt wird, ist diese Problematik oft noch nicht absehbar bzw. bekannt, weil bspw. ein Betonbauer die Durchführung und damit den Verschluss platziert, wohingegen erst deutlich später der Verschluss von bspw. einem Elektroinstallateur entfernt werden muss. Ferner können die in einer Mehrzahl vorgesehenen Ablasskanäle auch Vertiefungen darstellen, in die beim Einsetzen oder Herausnehmen des Verschlusses mit der Hand eingegriffen werden kann.

Bevorzugt ist der Verschluss jedenfalls bereichsweise aus einem zumindest transluzenten Material gebildet, sodass vor dem Entfernen des Verschlusses an einer Seite davon anstehendes Wasser an der entgegengesetzten Seite visuell erkennbar ist. Das Material ist "zumindest transluzent", also jedenfalls teilweise lichtdurchlässig, bevorzugt ist es transparent, also bild-/blickdurchlässig. Im Allgemeinen kann der Verschluss auch nur in einem Bereich transluzent/transparent ausgebildet sein, also eine Art Sichtfenster aufweisen; es könnte bspw. der Blindverschluss des Ablasskanals ein solches Sichtfenster darstellen. Bevorzugt ist jedoch ein im Gesamten zumindest transluzenter bzw. transparenter Verschluss, was einerseits herstellungstechnisch vorteilhaft sein und andererseits anstehendes Wasser zuverlässig erkennbar machen kann. Das Wasser wird üblicherweise nicht klar, sondern aufgrund von Verschmutzungen etc. eingetrübt und damit gut erkennbar sein. Umgekehrt kann aber auch ohne den zumindest transluzenten Bereich anstehendes Wasser festgestellt werden, bspw. indem der Monteur vor dem Entfernen des Deckels dagegen klopft und von einem hohlen Klang auf ein Luftvolumen schließen kann.

Bei einer bevorzugten Durchführung ist außenseitig an dem Rohrelement, vorzugsweise an einem Ende des Rohrelements, ein Aufhängungselement zur Befestigung der Durchführung beim Einbau in das Wand- oder Bodenelement vorgesehen. Vorzugsweise ist dieses Aufhängungselement als umlaufende, sich senkrecht zur Längsrichtung von dem Rohrelement weg erhebende Flanschplatte vorgesehen, besonders bevorzugt eben als an einem Ende des Rohrelements angeordnete Flanschplatte. Beim Einbau der Durchführung kann die endseitige Flanschplatte dann flächig an einer Schalung anliegen, die Durchführung kann durch Vernageln und/oder Verschrauben der Flanschplatte an der Schalung beim Vergießen befestigt sein.

In Längsrichtung gesehen hat das Aufhängungselement vorzugsweise eine polygonförmige Außenkontur, sodass es also mit entsprechend polygonförmigen Aufhängungselementen weiterer Durchführungen sich flächig ergänzend zusammenbaubar ist. Bevorzugt ist eine im Wesentlichen rechteckförmige, insbesondere quadratische, Außenkontur.

In bevorzugter Ausgestaltung weist das Aufhängungselement ein Verbindungselement auf, über welches die Durchführung mit einer weiteren Durchführung verbindbar ist. Dieses Verbindungselement ist vorzugsweise ein doppelt als ein erstes und ein dazu komplementäres zweites vorgesehenes Formschlusselement, sodass beim Zusammensetzen zweier Durchführungen das erste Formschlusselement der einen Durchführung einen Formschluss mit dem zweiten Formschlusselement der anderen Durchführung bildet, und umgekehrt. Die Formschlusselemente können nut- und federartig ineinandergreifen, vorzugsweise mit einer Hinterschneidung; das Zusammensetzen und Auseinandernehmen der Formschlusselemente erfolgt vorzugsweise mit einer jeweiligen Bewegung senkrecht zur Längsrichtung.

Die Erfindung betrifft auch ein Verfahren zum Ablassen von Wasser, insb. aus einer vorstehend diskutierten Durchführung. Letzteres ist aber nicht zwingend, es muss also nicht notwendigerweise ein Rohrelement der Durchführung die Durchgangsöffnung in dem Wand- oder Bodenelement frei halten, diese könnte bspw. auch als Kernbohrung eingebracht oder beim Gießen aus Beton von einem später herausgenommenen Formteil/Rohrelement frei gehalten worden sein. Entscheidend ist, dass die Durchgangsöffnung mit einem Verschluss verschlossen ist, wobei es sich z. B. einerseits um einen in einem Rohrelement angeordneten Blinddeckel handeln kann (siehe vorne), andererseits aber bspw. auch um eine Pressdichtung, die bspw. in eine Kernbohrung gesetzt ist. Eine Pressdichtung ist aus einem Elastomerkörper aufgebaut, an dessen beiden Stirnseiten über Spannbolzen miteinander verbundene Presskörper angeordnet sind, die durch Anziehen der Spannbolzen aufeinander zubewegt werden und den Elastomerkörper damit axial stauchen, der sich infolge dessen jedenfalls nach radial außen dichtend anlegt (ggf. auch nach innen bei durchgeführter Leitung).

Unabhängig von der Ausgestaltung des Verschlusses im Einzelnen ist nun auf einer Seite davon Wasser angeordnet, bevorzugt ist an dieser Seite ein Schutzrohr an die Durchgangsöffnung angeschlossen, in dem sich das Wasser gesammelt hat. Je nach Einbausituation kann die Durchgangsöffnung bis zu dem Verschluss auch vollständig mit Wasser gefüllt sein und kann dieses in hügeligem Gelände auch mit Druck anstehen, bspw. mit bis zu 5 bar, 4 bar, 3 bar bzw. 2 bar. Erfindungsgemäß wird dieses Wasser von der anderen Seite her durch eine Durchgangsöffnung mit begrenztem Querschnitt abgelassen; insoweit wird ausdrücklich auf die vorstehende Offenbarung verwiesen, wobei die dort zu dem Rohrelement und dessen Querschnitt getroffenen Angaben gleichermaßen auf die Durchgangsöffnung und deren Querschnitt zu lesen sind. Nach dem Ablassen des Wassers kann in vorteilhafter Weiser der Verschluss aus der Durchgangsöffnung genommen und kann bspw. eine Leitung hindurchgeführt werden.

Die Erfindung betrifft auch eine Verwendung einer Durchführung ohne Ablasseinheit gemeinsam mit einer Ablasseinheit in einer vorliegend für eine Durchführung mit Ablasseinheit beschriebenen Weise bzw. für eine solche Durchführung.

### Kurze Beschreibung der Figuren

Im Folgenden wird die Erfindung anhand eines Ausführungsbeispiels näher erläutert.

### Im Einzelnen zeigt

- Figur 1: eine erfindungsgemäße Verwendung einer Durchführung bei noch nicht eingesetzter Ablasseinheit in einer Schrägansicht;
- Figur 2: die Verwendung der Durchführung gemäß Figur 1 bei eingesetzter Ablasseinheit in einer Seitenansicht;
- Figur 3: den Verschluss der Durchführung gemäß den Figuren 1 und 2 in einer Aufsicht;
- Figur 4: die Ablasseinheit der Durchführung gemäß den Figuren 1 und 2 in einer Detailansicht;
- Figur 5: den Verschluss gemäß Figur 3 in einer Rückansicht;
- Figur 6: eine Detailansicht eines in einem Ablasskanal angeordneten Zapfens der Ablasseinheit gemäß Figur 4.

### Bevorzugte Ausführung der Erfindung

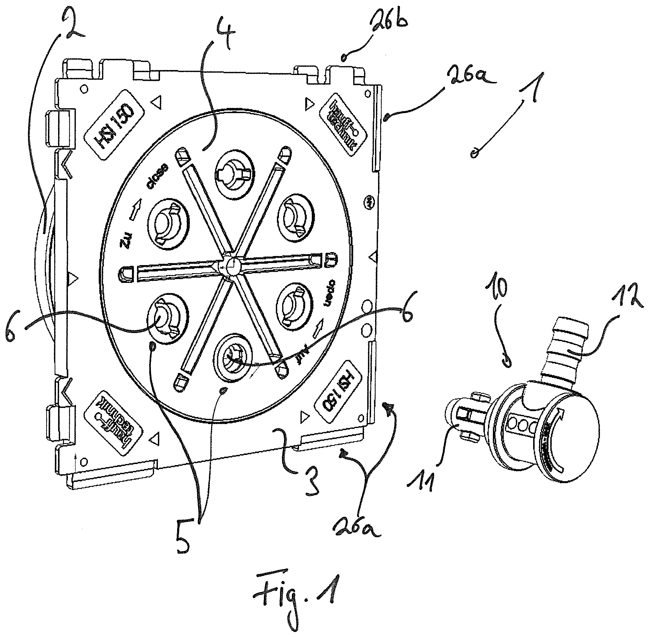

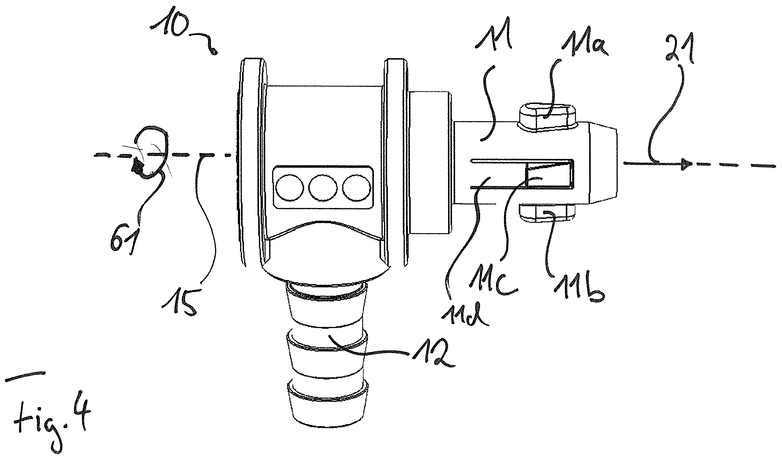

Figur 1 zeigt eine erfindungsgemäße Verwendung einer Durchführung 1 mit einem Rohrelement 2, das in der Schrägansicht gemäß Figur 1 weitgehend von einer monolithisch damit ausgebildeten Flanschplatte 3 verdeckt wird, aber bspw. in der Seitenansicht gemäß Figur 4 gut sichtbar ist. Ferner ist ein Verschluss 4 vorgesehen, der als Blinddeckel in das Rohrelement 2 eingesetzt ist und dieses bspw. während einer Bauphase verschließt. Der eingesetzte Verschluss 4 ist vorliegend über eine Bajonett-Arretierung im Rohrelement 2 gehalten und kann bezogen auf Figur 1 durch eine Linksdrehung (kombiniert mit einem leichten Andrücken) gelöst und dann aus dem Rohrelement 2 herausgenommen werden.

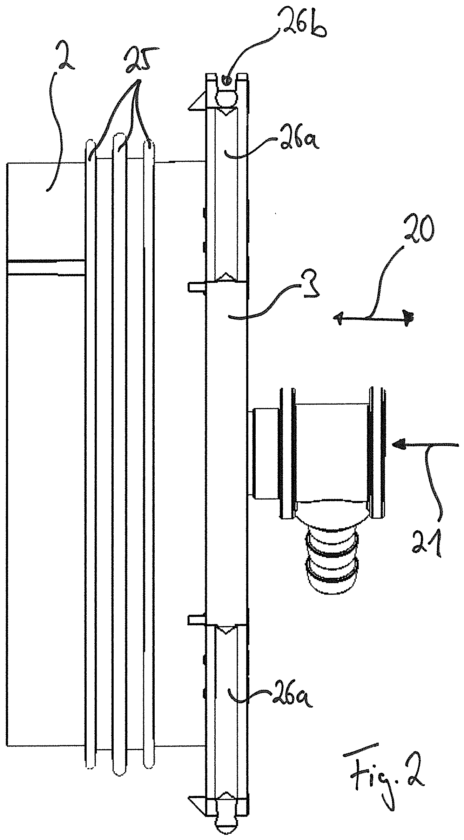

Der Verschluss 4 ist während einer Bauphase eingesetzt. Dabei wird, wenn eine Betonwand gegossen wird, die Flanschplatte 3 an der dafür vorgesehenen Schalung vernagelt und hält das Rohrelement 2 dann eine Durchgangsöffnung in dem Beton frei. Das Rohrelement 2 erstreckt sich dabei üblicherweise nicht für sich über die gesamte Wanddicke, sondern es kann zur Verlängerung ein weiteres (nicht gezeigtes) Rohrstück angesetzt werden (das bspw. in der Darstellung gemäß Fig. 2 von links in das Rohrelement 2 eingeschoben wird). Nach dem Gießen und Aushärten des Betons kann dann gebäudeaußenseitig ein Schutzrohr angesetzt werden (ebenfalls nicht dargestellt), in dem später die eigentliche Leitung, z. B. ein Elektrokabel, geführt wird. Dieses Schutzrohr ist bzw. wird in einem Graben im Erdreich verlegt, der dann noch vor dem Verlegen der eigentlichen Leitung wieder zugeschüttet wird. In der Darstellung gemäß Figur 2 kann also nach links an das Rohrelement 2 ein noch innerhalb der Wand angeordnetes Rohrstück anschließen, auf welches das sich im Erdreich erstreckende Schutzrohr folgt.

Die Schrägansicht gemäß Fig. 1 gibt im Prinzip wieder, was der Monteur, der bspw. das Elektrokabel verlegen soll, vorfindet, wenn er vom Gebäudeinneren her auf die (nicht dargestellte) Wand blickt. Hat sich nun in dem Rohrelement 2 mit dem daran angeschlossenen Rohrsystem z. B. Regenwasser gesammelt, würde dieses beim Entfernen des Verschlusses unkontrolliert ins Gebäudeinnere laufen, mitunter auch unter hohem Druck (im Falle eines Schutzrohres mit Gefälle, vgl. auch die Beschreibungseinleitung). Der Verschluss 4 ist vorliegend transparent ausgebildet, damit anstehendes Wasser durch eine Sichtkontrolle feststellbar ist.

Ferner sind in dem Verschluss 4 umlaufend verteilt sechs Ablasskanäle 5 vorgesehen, die im Ausgangszustand jeweils noch durch einen Blindverschluss 6 verschlossen sind. Die Blindverschlüsse 6 sind jeweils monolithisch mit dem übrigen Verschluss 4 aus demselben Material geformt, vorliegend aus Polycarbonat. Zum Ausstoßen eines Blindverschlusses 6 ist eine Ablasseinheit 10 vorgesehen, die als Hohlkörper funktional ein L-förmiges Rohrstück darstellt. Die Ablasseinheit 10 weist einen Zapfen 11 auf, mit dem sie in den entsprechenden Ablasskanal 5 eingeschoben wird und dabei den Blindverschluss 6 ausstößt. Die Ablasseinheit 10 wird mit einem Schlagwerkzeug eingeschlagen, bspw. einem Hammer.

Ferner weist die Ablasseinheit 10 einen Schlauchanschluss 12 auf, auf den ein vorliegend nicht dargestellter Schlauch gesetzt wird. Beim Einsetzen der Ablasseinheit 10 in den entsprechenden Ablasskanal 5 kann der Schlauch bereits aufgesetzt, dabei aber bspw. noch mit einer Klemme als Quetschflansch blockiert sein. Ist der Blindverschluss 6 dann ausgestoßen und die Ablasseinheit 10 in dem Ablasskanal 5 arretiert (siehe unten im Detail), kann der Schlauch nach außerhalb des Gebäudes bzw. zu einem Ablauf verlegt und das in dem Rohrelement 2 befindliche Wasser abgelassen werden. Anschließend kann der Verschluss 4 entnommen und bspw. ein Elektrokabel durch das Rohrelement 2 und das angeschlossene Rohrsystem verlegt werden.

Figur 2 zeigt die Durchführung 1 bei eingesetzter Ablasseinheit 10, und zwar senkrecht zu einer Längsrichtung 20 des Rohrelements darauf blickend (bezogen auf Figur 1 von unten). Die Ablasseinheit 10 ist in einer Einschieberichtung 21 in den Ablasskanal eingeschoben, also in Figur 2 nach links. Figur 2 lässt ferner eine außenseitig an das aus Acryl-Butadien-Styrol (ABS) vorgesehene Rohrelement 2 in einem Zwei-Komponenten-Spritzgussverfahren aus einem thermoplastischen Elastomer (TPE) angespritzte Mehrfachstegdichtung 25 erkennen, die von dem Beton umschlossen wird. Ferner sind an der Flanschplatte 3 angeordnete Formschlusselemente 26 zu erkennen, die feder- 26a bzw. nutartig 26b ausgebildet sind, vgl. dazu auch die Schrägansicht gemäß Figur 1. Mittels dieser Formschlusselemente 26 sind mehrere Durchführungen modular zusammenbaubar.

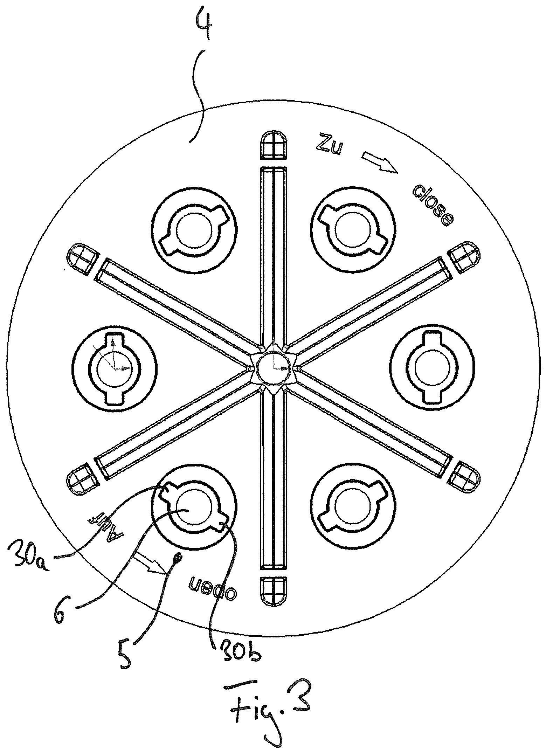

Im Folgenden wird die Ablasskanalgeometrie weiter im Detail erläutert, wobei der Übersichtlichkeit halber nur auf einen Ablasskanal Bezug genommen wird, dies aber ebenso für die übrigen Ablasskanäle gilt. Figur 3 zeigt den Verschluss 4 in einer Aufsicht, also entlang der Einschieberichtung darauf blickend. Der Ablasskanal 5 ist hier noch mit dem Blindverschluss 6 verschlossen (letzterer geht über eine hier nicht dargestellte Sollbruchstelle in den übrigen Verschluss 4 über). In dem Ablasskanal 5 sind zwei sich in der Einschieberichtung erstreckende Rillen 30a, b vorgesehen, in denen beim Einschieben des Zapfens 11 außenseitig an diesem vorgesehene Vorsprünge 11a, b geführt sind (siehe Fig. 4 im Vergleich). Während des Einschiebens ist aufgrund dieser Führung eine Drehbewegung des Zapfens 11 blockiert, die Ablasseinheit 10 kann dann aber in einer in Figur 6 gezeigten Einschiebeposition gedreht und damit arretiert werden.

Der Zapfen 11 weist ferner als Rastmechanismus zwei Rastnasen auf, wovon in der Ansicht gemäß Figur 4 nur eine vordere sichtbar ist und die andere verdeckt wird. Wird der Zapfen 11 in den Ablasskanal 5 eingeschoben, also geradlinig mit einem Schlagwerkzeug, insb. einem Hammer eingeschlagen, verrasten die Rastnasen noch vor der anschließenden Dreharretierung. Während des Einschiebens werden die Rastnasen von einer den Ablasskanal 5 begrenzenden Wandfläche nach innen gedrückt, also nach radial innen zu einer Drehachse 25 hin. Wie für die vordere Rastnase ersichtlich, ist diese dazu federnd auf einer Zunge 11d gelagert, die durch eine in sich nicht geschlossene Trennfuge gebildet ist (die aber die Wand des Zapfens vollständig durchsetzt).

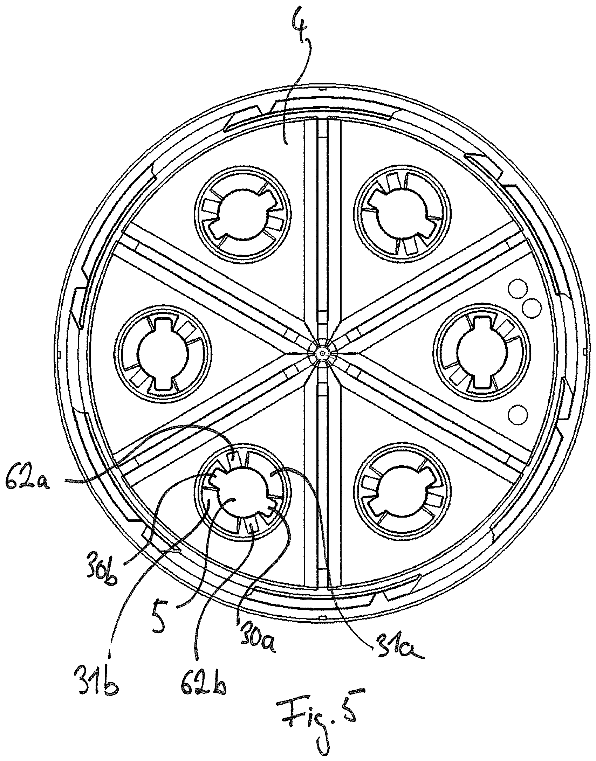

Der anschließenden Dreharretierung dienen die Vorsprünge 11a, b, die dann mit der Drehbewegung um die Drehachse 15 zunächst jeweils auf einer ansteigenden Führungsfläche 31a, b geführt sind, vgl. auch die Figuren 5 und 6. Die so geführten Vorsprünge 11a, b ziehen den Zapfen 11 in seinen Sitz in dem Ablasskanal 5, und zwar gegen die Federkraft eines in Figur 6 dargestellten Dichtrings 60. Nach dem Einschlagen und damit Öffnen des Blindverschlusses - Figur 5 zeigt den Ablasskanal 5 ohne Blindverschluss - sichern also zunächst die Rastnasen gegen ein Herausrutschen, kann es aber insbesondere bei unter hohem Druck anstehenden Wasser noch eine Undichtigkeit geben. Diese wird mit der Dreharretierung und damit dem Komprimieren des Dichtrings 60 aufgehoben.

Figur 6 illustriert ferner, dass in der Drehrichtung 61 auf jede der Führungsflächen 30a, b eine Vertiefungsfläche 62 a,b folgt, in die der jeweilige Vorsprung 11a, b ein Stück weit hineinrutscht. Die Vertiefungsflächen 62 a,b sind also jeweils gegenüber einem Endabschnitt der jeweiligen Führungsfläche 31a, b zurückversetzt. Die Vorsprünge sitzen so dann gegen ein unerwünschtes Herausdrehen gesichert, der Zapfen 11 muss zum Herausdrehen zunächst ein Stück weit gegen die Federkraft des Dichtrings 60 gedrückt werden, um die Vorsprünge 11a, b von der jeweiligen Vertiefungsfläche 62a, b abzuheben.

### Bezugszeichen

| | |
|---|---|
| Durchführung | 1 |
| Rohrelement | 2 |
| Verschluss | 4 |
| Ablasskanal | 5 |
| Blindverschluss | 6 |
| Ablasseinheit | 10 |
| Zapfen | 11 |
| Vorsprung | 11a, b |
| Rastmechanismus | 11c |
| Schlauchanschluss | 12 |
| Drehachse | 15 |
| Längsrichtung | 20 |
| Einschieberichtung | 21 |
| Rille | 30a, b |
| Führungsfläche | 31a, b |
| Drehrichtung | 61 |
| Vertiefungsfläche | 62a, b |

## Patentansprüche

1. Verwendung einer Durchführung (1) zum Einbauen in ein Wand- oder Bodenelement eines Gebäudes,
welche Durchführung ein Rohrelement (2) und einen das Rohrelement (2) hinsichtlich einer Längsrichtung (20) des Rohrelements (2) verschließenden Verschluss (4)
aufweist,
sowie ferner einen Ablasskanal (5) mit einem im Vergleich zu dem Rohrelement (2) kleineren Querschnitt aufweist, durch den auf einer Seite des Verschlusses (4) in dem Rohrelement (2) befindliches Wasser von der anderen Seite her abgelassen werden kann,
bei welcher Verwendung das Rohrelement (2) eine Durchgangsöffnung zwischen zwei entgegengesetzten Seiten des Wand- oder Bodenelements freihält,
wobei gebäudeaußenseitig ein Schutzrohr an die Durchgangsöffnung und damit zumindest mittelbar an das Rohrelement (2) der Durchführung (1) angeschlossen wird,
in welchem Schutzrohr dann eine Leitung gebäudeaußenseitig verlegt wird, die dann in der Längsrichtung (20) des Rohrelements (2) durch das Wand- oder Bodenelement hindurchgeführt ist,
wobei vor dem Verlegen der Leitung zunächst Wasser, das sich in dem Schutzrohr sammeln kann, durch den Ablasskanal (5) zum Gebäudeinneren hin abgelassen wird und dann der Verschluss (4) entfernt wird.

2. Verwendung nach Anspruch 1, bei welcher der Ablasskanal (5) der Durchführung (1) in dem Verschluss (4) vorgesehen ist.

3. Verwendung nach Anspruch 1 oder 2 mit einer Ablasseinheit (10), die in den Ablasskanal (5) eingesetzt wird, wobei der Ablasskanal (5) mit einem Blindverschluss (6) verschlossen ist, der mit dem Einsetzen der Ablasseinheit (10) geöffnet wird.

4. Verwendung nach Anspruch 3, bei welcher der Blindverschluss (6) einstückig mit einem den Ablasskanal (5) bildenden Teil der Durchführung (1), vorzugsweise dem Verschluss (4), ausgebildet ist, vorzugsweise monolithisch über eine Sollbruchstelle damit verbunden ist und mit dem Einsetzen ausgestoßen wird.

5. Verwendung nach Anspruch 3 oder 4, bei welcher ein Zapfen (11) der Ablasseinheit (10) in einer Einschieberichtung (21) geradlinig in den Ablasskanal (5) bis in eine Einschiebeposition eingeschoben wird und mit dem Einschieben in die Einschiebeposition den Blindverschluss (6) öffnet.

6. Verwendung nach Anspruch 5, bei welcher der Zapfen (11) in der Einschiebeposition durch Drehen in einer Drehrichtung (61) um eine zu der Einschieberichtung (21) parallele Drehachse (15) arretiert wird.

7. Verwendung nach Anspruch 6, bei welcher sich außenseitig an dem Zapfen (11), senkrecht zu der Drehachse (15) ein Vorsprung (11a, b) weg erhebt, der sich in der Einschiebeposition über zumindest einen Abschnitt einer Drehbewegung in der Drehrichtung (61) an einer dem Ablasskanal (5) zugeordneten Führungsfläche (31a, b) abstützt, die derart ansteigt, dass der daran entlang geführte Vorsprung (11a, b) den Zapfen (11) zunehmend in einen Sitz in dem Ablasskanal (5) zieht.

8. Verwendung nach Anspruch 7, bei welcher in der Drehrichtung (61) auf einen Endabschnitt der Führungsfläche (31a, b) eine Vertiefungsfläche (62a, b) folgt, die relativ zu der Führungsfläche (31a, b) in dem Endabschnitt entgegen der Einschieberichtung (21) derart zurückversetzt liegt, dass der Vorsprung (11a, b) darin am Ende der Drehbewegung gegen eine Drehung mit entgegengesetzter Drehrichtung gesichert sitzt.

9. Verwendung nach einem der Ansprüche 5 bis 8, bei welcher der Zapfen (11) einen Rastmechanismus (11c) aufweist, der in der Einschiebeposition einrastet und den Zapfen (11) nach dem Öffnen des Blindverschlusses (6) gegen ein Herausrutschen sichert, und zwar auch unabhängig von einer etwaigen Dreharretierung des Zapfens (11).

10. Verwendung nach Anspruch 9 in Verbindung mit Anspruch 7 oder 8, bei welcher der Vorsprung (11a, b) in dem Ablasskanal (5) in einer sich in der Einschieberichtung (21) erstreckenden Rille (30a, b) geführt ist, womit bei während des Einschiebens in dem Ablasskanal (5) befindlichem Vorsprung (11a, b) eine Drehbewegung in der Drehrichtung (61) blockiert ist, wobei der Vorsprung (11a, b) in der Einschiebeposition, in welcher der Rastmechanismus (11c) eingerastet ist, außerhalb der Rille (30a, b) liegt und die Drehbewegung damit freigegeben ist.

11. Verwendung nach einem der Ansprüche 3 bis 10 mit einer Dichtung (60), welche die in den Ablasskanal (5) eingesetzte Ablasseinheit (10) gegen einen den Ablasskanal (5) bildenden Teil der Durchführung (1) dichtet.

12. Verwendung nach einem der Ansprüche 3 bis 11, bei welcher die Ablasseinheit (10) einen Schlauchanschluss (12) aufweist, vorzugsweise einen außenseitig gerippten Anschlussstutzen.

13. Verwendung nach einem der vorstehenden Ansprüche, bei welcher der Verschluss (4) zerstörungsfrei aus dem Rohrelement (2) entfernbar und für ein erneutes Verschließen des Rohrelements (2) wieder einsetzbar ist, wobei in dem Verschluss (4) bevorzugt eine Mehrzahl Ablasskanäle (5) umlaufend aufeinander folgend vorgesehen sind.

14. Verwendung nach einem der vorstehenden Ansprüche, bei welcher sich auf einer Seite des Verschlusses Wasser befindet, welches durch den Ablasskanal (5) von der anderen Seite her abgelassen wird.

## Claims

1. A use of a lead-through (1) for the installation in a wall or floor element of a building,
the lead-through comprises a tube element (2) and a closure (4) locking the tube element (2) regarding a longitudinal direction (20) of the tube element (2),
as well as comprising further a drainage duct (5) with a smaller cross-section in comparison to the tube element (2), through which water located on one side of the closure (4) in the tube element (2) can be drained to the other side,
in which use the tube element (2) keeps clear a through opening between two opposing sides of the wall or floor element,
wherein outside of the building a protective tube is connected to the lead-through opening and thereby at least indirectly connected to the tube element (2) of the lead-through (1),
in said protective tube a line is then laid outside of the building, which is then led through in the longitudinal direction (20) of the tube element (2) through the wall or floor element,
wherein before the laying of the line, initially water, which can accumulate in the protective tube, is drained through the drainage duct (5) into the inside of the building and thereafter the closure (4) is removed.

2. The use according to claim 1, wherein the drainage duct (5) of the lead-through (1) is provided in the closure (4).

3. The use according to claim 1 or 2 with a drainage unit (10), which is inserted into the drainage duct (5), wherein the drainage duct (5) is closed with a blind plug (6), which is opened with the insertion of the drainage unit (10).

4. The use according to claim 3, wherein the blind plug (6) is adapted to be one-piece with a part of the lead-through (1) forming the drainage duct (5), preferably with the closure (4), thereby preferably is connected monolithically via a predetermined breaking point and is ejected by the insertion.

5. The use according to claim 3 or 4, wherein a pin (11) of the drainage unit (10) in an insertion direction is inserted in a straight line in the drainage duct (5) until an insertion position and opens the blind plug (6) by the insertion into the insertion position.

6. The use according to claim 5, in which the pin (11) in the insertion position is locked in place by rotating in a rotating direction (61) about a rotating axis (15) parallel to the insertion direction (21).

7. The use according to claim 6, in which a protrusion (11a, b) on the outside of the pin (11) rises perpendicular to the rotating axis (15), which protrusion (11a, b) rests at the insertion position on a guide surface (31a, b) assigned to the drainage duct (5) over at least a segment of a rotating movement in the rotating direction (61), which guide surface (31a, b) rises in such a way, that the protrusion (11a, b) that is guided along thereon pulls the pin (11) increasingly into a seat in the drainage duct (5).

8. The use according to claim 7, in which a depressed surface (62a, b) in the rotating direction (61) follows a terminal section of the guide surface (30a, b), which depressed surface (62a, b) relative to the guide surface (31a, b) in the terminal section opposite to the insertion direction (21) lies recessed in such a way, that the protrusion (11a, b) sits secured therein at the end of the rotating movement against a rotation of an opposite rotating direction.

9. The use according to one of claims 5 to 8, in which the pin (11) comprises a locking mechanism (11c), which locks into place in the insertion position and secures the pin (11) from slipping out after the opening of the blind plug (6), and namely also independently from a possible rotational locking of the pin (11).

10. The use according to claim 9 in connection with claim 7 or 8, in which the protrusion (11a, b) in the drainage duct (5) is guided in a groove (30a, b) extending in the insertion direction (21), whereby a rotating movement in the rotating direction (61) is blocked in the case of the protrusion located in the drainage duct (5) during the insertion, wherein the protrusion (11a,b) in the insertion position in which the locking mechanism (11c) is locked in place lies beyond the groove (30a, b), and the rotating movement is thereby released.

11. The use according to one of claims 3 to 10, with a seal (60), which seal seals the drainage unit (10) inserted into the drainage duct (5) against a part of the lead-through (1) forming the drainage duct (5).

12. The use according to one of claims 3 to 11, in which the drainage unit (10) comprises a hose connection (12), preferably a connecting nozzle corrugated on the outside.

13. The use according to one of the preceding claims, in which the closure (4) is non-destructively removable from the tube element (2), and is again insertable for a closing of the tube element (2) again, wherein, in the closure (4), preferably a plurality of drainage ducts (5) are provided, arranged circumferentially in sequence.

14. The use according to one of the preceding claims, in which water is located on one side of the closure, which water is drained through the drainage duct (5) from the other side.

## Revendications

1. Utilisation d'un passage (1) à encastrer dans un élément de mur ou de sol d'un bâtiment,
lequel passage présente un élément tubulaire (2) et un bouchon (4) obturant l'élément tubulaire (2) eu égard au sens longitudinal (20) de l'élément tubulaire (2),
et présente en outre une voie d'évacuation (5) dont la section transversale est inférieure à celle de l'élément tubulaire (2) et par laquelle de l'eau présente dans l'élément tubulaire (2) d'un côté du bouchon (4) peut être évacuée par l'autre côté,
dans laquelle utilisation l'élément tubulaire (2) dégage une ouverture de passage entre deux côtés opposés de l'élément de mur ou de sol,
un raccordement du tube de protection à l'ouverture de passage et ainsi, au moins indirectement, à l'élément tubulaire (2) du passage (1) s'effectuant à l'extérieur du bâtiment,
une conduite étant ensuite installée, à l'extérieur du bâtiment, dans ledit tube de protection et étant avancée dans le sens longitudinal (20) de l'élément tubulaire (2) pour traverser l'élément de mur ou de sol,
avant l'installation de la conduite, l'eau susceptible de s'accumuler dans le tube de protection étant tout d'abord évacuée par la voie d'évacuation (5) vers l'intérieur du bâtiment, le bouchon (4) étant ensuite enlevé.

2. Utilisation selon la revendication 1, dans laquelle la voie d'évacuation (5) du passage (1) est prévue dans le bouchon (4).

3. Utilisation selon la revendication 1 ou 2 comportant une unité d'évacuation (10) mise en place dans la voie d'évacuation (5), ladite voie d'évacuation (5) étant bouchée par un bouchon borgne (6) qui s'ouvre lors de la mise en place de l'unité d'évacuation (10).

4. Utilisation selon la revendication 3, dans laquelle le bouchon borgne (6) est conçu d'un seul tenant avec une partie du passage (1), de préférence son bouchon (4), qui forme la voie d'évacuation (5), en y étant relié de préférence de façon monolithique par l'intermédiaire d'une ligne de rupture et étant éjecté lors de la mise en place.

5. Utilisation selon la revendication 3 ou 4, dans laquelle un téton (11) de l'unité d'évacuation (10) peut être introduit par coulissement en ligne droite, dans un sens d'introduction (21), dans la voie d'évacuation (5) pour prendre une position d'introduction et ouvrir le bouchon borgne (6) sous l'effet du coulissement visant à lui faire prendre la position d'introduction.

6. Utilisation selon la revendication 5, dans laquelle le téton (11) peut être bloqué dans la position d'introduction sous l'effet d'une rotation effectuée dans un sens de rotation (61) sur un axe de rotation (15) qui est parallèle au sens d'introduction (21).

7. Utilisation selon la revendication 6, dans laquelle une partie en saillie (11a, b) s'élève perpendiculairement à l'axe de rotation (15) sur l'extérieur du téton (11), laquelle, en position d'introduction, vient en contact avec une surface de guidage (31a, b) associée à la voie d'évacuation (5), sur au moins une portion d'une rotation dans le sens de rotation (61), laquelle surface de guidage est en pente ascendante de telle manière que la partie en saillie (11a, b) guidée le long de celle-ci attire progressivement le téton (11) vers un siège situé dans la voie d'évacuation (5).

8. Utilisation selon la revendication 7, dans laquelle une surface en creux (62a, b) fait suite, dans le sens de rotation (61), à une portion terminale de la surface de guidage (31a, b) et est déportée vers l'arrière dans la portion terminale par rapport à la surface de guidage (31a, b) à l'inverse du sens d'introduction (21) de telle manière que la partie en saillie (11a, b) vient y reposer à la fin de la rotation et est empêchée de tourner selon un sens de rotation opposé.

9. Utilisation selon l'une des revendications 5 à 8, dans laquelle le téton (11) présente un mécanisme d'enclenchement (11c) qui s'enclenche dans la position d'introduction et qui empêche le téton (11) de s'échapper après l'ouverture du bouchon borgne (6), et ce également indépendamment d'un quelconque blocage de la rotation du téton (11).

10. Utilisation selon la revendication 9, en conjonction avec la revendication 7 ou 8, dans laquelle la partie en saillie (11a, b) est guidée dans la voie d'évacuation (5) dans une rainure (30a, b) qui s'étend dans le sens d'introduction (21) et grâce à laquelle toute rotation dans le sens de rotation (61) est bloquée si une partie en saillie (11a, b) se trouve dans la voie d'évacuation (5) pendant l'introduction, étant entendu que la partie en saillie (11a, b), en position d'introduction dans laquelle le mécanisme d'enclenchement (11c) est enclenché, se trouve en dehors de la rainure (30a, b) et permet ainsi la rotation.

11. Utilisation selon l'une des revendications 3 à 10 avec un joint (60) qui effectue l'étanchéité de l'unité d'évacuation (10) mise en place dans la voie d'évacuation (5) vis-à-vis d'une partie du passage (1) formant la voie d'évacuation (5).

12. Utilisation selon l'une des revendications 3 à 11, dans laquelle l'unité d'évacuation (10) présente un raccord à tuyau flexible (12), de préférence un raccord nervuré sur l'extérieur.

13. Utilisation selon l'une des revendications précédentes, dans laquelle le bouchon (4) peut être retiré de l'élément tubulaire (2) de manière non destructive et peut être remis en place pour une nouvelle fermeture de l'élément tubulaire (2), une pluralité de voies d'évacuation (5) étant de préférence prévues circonférentiellement les unes à la suite des autres dans ledit bouchon (4).

14. Utilisation selon l'une des revendications précédentes, dans laquelle il se trouve de l'eau d'un côté du bouchon, laquelle peut être évacuée par l'autre côté, par la voie d'évacuation (5).
